# EUROPÄISCHE PATENTANMELDUNG

(11) **EP 2 388 538 A2**
(43) Veröffentlichungstag der Anmeldung: **23.11.2011**
(21) Anmeldenummer: 11163471.3
(22) Anmeldetag: 21.04.2011
(51) Int. Cl.: F24J 2/52

(54) **Montagefuss für Solarmodule**

(30) Priorität: 17.05.2010 DE 102010029001
(71) Anmelder: HILTI Aktiengesellschaft, 9494 Schaan (LI)
(72) Erfinder: Bragagna, Elio, 6822 Duens (AT); Carbonare, Martin, 6842 Koblach (AT)

(57) **Zusammenfassung**

Ein Montagefuß (10) für Solarmodule weist eine Grundkörper (12) auf, der wenigstens eine Standfläche (22) hat, mit welcher sich der Montagefuß (10) am Untergrund (24) abstützen kann, sowie eine variable Aufnahme für eine Modulplatte (16, 20), die als V-förmiges Gabellager (50) zur Aufnahme eines Randes der Modulplatte (16, 20) ausgebildet ist.

## Beschreibung

Die Erfindung betrifft einen Montagefuß für Solarmodule mit einer variablen Aufnahme für eine Modulplatte.

Solaranlagen erfreuen sich derzeit angesichts steigender Energiekosten, zahlreicher Förderprogramme für regenerative Energien und aktueller Diskussionen über die Folgen eines globalen Klimawandels sowohl aus ökonomischen als auch ökologischen Gründen wachsender Beliebtheit. Eigentümer von für Solaranlagen geeigneten Immobilien sind dabei stets bestrebt, den maximalen Energieertrag bei möglichst geringen Investitionen in die Solaranlage sowie einen solargerechten Umbau des Gebäudes zu erzielen.

Es hat sich gezeigt, dass Flachdächer für eine Nutzung durch Solaranlagen besonders geeignet sind, da in der Regel keine oder lediglich minimale bauliche Anpassungen am Gebäude selbst notwendig sind. Üblicherweise wird als Unterkonstruktion lediglich ein Montagesystem aufgestellt, um die Solarmodule schräg zu stellen und auf der Nordhalbkugel nach Süden hin auszurichten, wodurch der Wirkungsgrad und damit die Energieausbeute der Solaranlage deutlich ansteigen.

Um Schäden an der Dachhaut oder der bei Flachdächern empfindlichen Dachabdichtung zu vermeiden, wird dieses Montagesystem üblicherweise installiert, ohne eine direkte Befestigung oder Verbindung zum Gebäude herzustellen. Die Sicherung des Montagesystems gegen Verschieben oder Abheben erfolgt über Ballast, wobei jedoch die maximale Traglast des Flachdachs zu beachten ist. Das als Unterkonstruktion dienende Montagesystem bildet somit einen Dachaufsatz, an dem die Solarmodule unter einem gewünschten Neigungswinkel befestigt werden. Abhängig von der geografischen Lage des Gebäudes und der Neigung des Daches variiert der für einen möglichst hohen Wirkungsgrad der Solarmodule ideale Neigungswinkel.

Aufgabe der Erfindung ist es, einen möglichst einfachen und preiswert herstellbaren Montagefuß zu schaffen, der für verschiedene Neigungswinkels des Solarsystems und für verschiedene Dicken der einzelnen Solarmodule einsetzbar ist.

Erfindungsgemäß wird diese Aufgabe gelöst durch einen Montagefuß für Solarmodule mit einem Grundkörper, der wenigstens eine Standfläche hat, mit welcher sich der Montagefuß am Untergrund abstützen kann, und mit einer variablen Aufnahme für eine Modulplatte, die als V-förmiges Gabellager zur Aufnahme eines Randes der Modulplatte ausgebildet ist. Die Erfindung beruht auf der Erkenntnis, dass mit einem einzigen Montagefuß, der keine einstellbaren Bauteile aufweist, unterschiedliche Neigungswinkel erzielt und unterschiedlich dicke Solarmodule aufgenommen werden können, indem ein Gabellager verwendet wird, das sich zu einem offenen Ende hin aufweitet. Das Solarmodul kann mit einem Rand in das Gabellager eingeschoben werden, bis das Solarmodul jeweils mit einer Kante an der oberen und der unteren Gabelseite anliegt. Der Montagefuß kann zum einen für verschiedene Plattendicken verwendet werden. Eine dickere Platte liegt weiter außen an den Gabelseiten an, während eine dünnere Platte weiter in das Gabellager eingeschoben werden kann, bis die Kanten an den Gabelseiten anliegen. Die Modulplatte kann ebenso in verschiedenen Neigungswinkel in die Aufnahme eingesetzt werden, wobei die Kanten der Modulplatte jeweils an unterschiedlichen Anlagepunkten sowohl an der oberen als auch an der unteren Gabelseite anliegen und so sicher gehalten sind. Der Neigungswinkel kann dabei zwischen den Neigungswinkel der beiden Gabelseiten variiert werden. Im Extremfall liegt das Solarmodul flach auf einer Gabelseite auf und mit einer Kante der gegenüberliegenden Fläche an der zweiten Gabelseite an. Zwischen diesen Extremen kann die Modulplatte beliebig verschwenkt werden, da das Solarmodul jeweils an den beiden Gabelinnenseiten anliegt und so sicher gehalten ist.

Das Gabellager weist dafür vorzugsweise eine obere Anlagefläche und eine untere Anlagefläche für den Rand der Modulplatte auf, die gegenüberliegend auf der Innenseite des Gabellagers angeordnet sind. Die Kanten der Modulplatte liegen jeweils an den Anlageflächen an und können auf diesen verschoben werden, so dass der Winkel der Modulplatte stufenlos eingestellt werden kann.

Solarmodule werden üblicherweise schräggestellt nach Süden ausgerichtet. Der Montagefuß muss also in jedem Fall eine schräggestellte Modulplatte aufnehmen, um einen idealen Wirkungsgrad der Solarmodule zu erzielen. Lediglich der genaue Neigungswinkel muss abhängig von der geografischen Lage und einer eventuellen Dachneigung angepasst werden. Die obere Anlagefläche und die untere Anlagefläche sind deshalb vorzugsweise zur Standfläche des Grundkörpers geneigt, und der Neigungswinkel der oberen Anlagefläche ist größer als der Neigungswinkel der unteren Anlagefläche. Dadurch kann der Neigungswinkel der Modulplatte in einem möglichst großen Bereich verstellt werden.

Um den Einstellbereich des Neigungswinkels der Modulplatte zu vergrößern, ist an der unteren Anlagefläche ein in Richtung zur oberen Anlagefläche ragender, insbesondere parallel zum Rand der Modulplatte verlaufender Vorsprung vorgesehen, auf dem die Modulplatte aufliegt. Der Vorsprung dient als Auflagepunkt, um den die Modulplatte verschwenkt werden kann. Da die Modulplatte durch den Vorsprung beabstandet von der unteren Anlagefläche gehalten ist, ist der Neigungswinkel nicht durch die untere Anlagefläche begrenzt. Zudem dient der Vorsprung als Schwenkpunkt, der eine einfachere Neigungswinkelverstellung der Modulplatte ermöglicht.

Um ein zu weites Einschieben einer dünneren Modulplatte und dadurch ein eventuelles Verklemmen der Modulplatte im Montagefuß zu verhindern, weist das Gabellager beispielsweise einen Anschlag für den Rand der Modulplatte auf.

Der Montagefuß kann beispielsweise ein unteres Auflager für eine erste schräggestellte Modulplatte aufweisen und ein oberes Auflager für eine zweite Modulplatte. Das Gabellager ist vorzugsweise am unteren Auflager des Montagefußes vorgesehen. Für die Installation einer Solaranlage können so mehrere hintereinander angeordnete Montagefüße verwendet werden. Die Füße werden so positioniert, dass ein erster Montagefuß mit dem als Gabellager ausgebildeten unteren Auflager den unteren Rand einer Modulplatte aufnehmen kann. Ein zweiter Montagefuß kann mit dem oberen Auflager den oberen Rand der Modulplatte aufnehmen. Das untere Auflager des zweiten Montagefußes dient als Aufnahme für eine zweite Modulplatte. Die Montage der gesamten Solaranlage kann so mit nur einer Sorte Montagefüße erfolgen, so dass die Montagekosten sowie die Montagezeit reduziert werden können.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Montagefußes für Solarmodule;
- Figur 2 eine perspektivische Ansicht einer Solaranlage mit mehreren erfindungsgemäßen Montagefüßen;
- Figur 3 einen Ausschnitt der Solaranlage aus Figur 2 in perspektivischer Ansicht;
- Figur 4 eine Detailansicht des erfindungsgemäßen Montagefußes im Bereich des Gabellagers; und
- Figur 5 die Montage einer Modulplatte in einem erfindungsgemäßen Montagefuß.

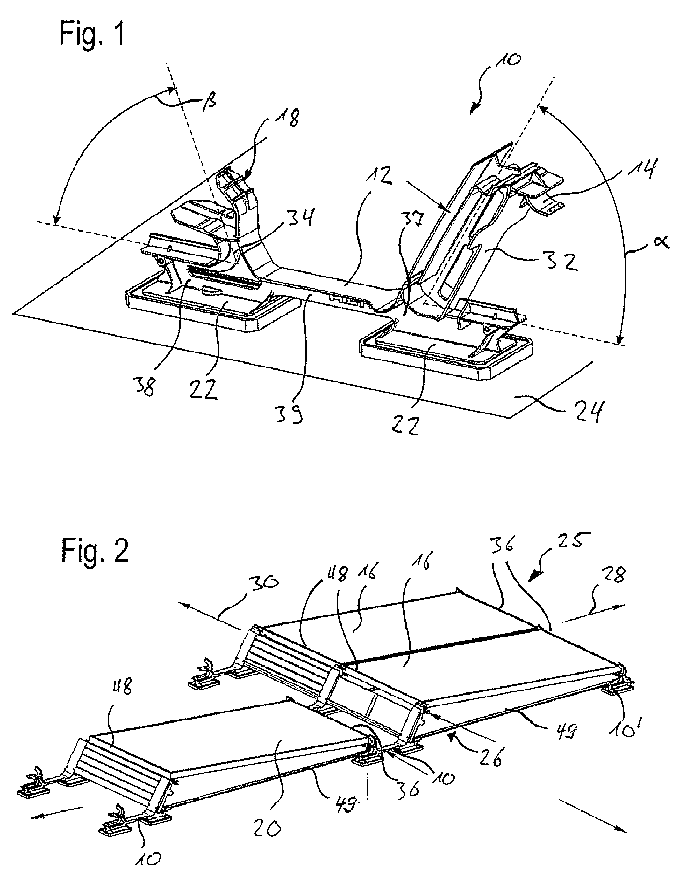

Die Figur 1 zeigt einen Montagefuß 10 für Solarmodule, mit einem Grundkörper 12, einem mit dem Grundkörper 12 verbundenen oberen Auflager 14 für eine erste schräggestellte Modulplatte 16 und einem mit dem Grundkörper 12 verbundenen unteren Auflager 18 für eine zur ersten Modulplatte 16 nichtkoplanare, benachbarte, zweite schräggestellte Modulplatte 20. Der Grundkörper 12 hat wenigstens eine Standfläche 22, mit welcher sich der Montagefuß 10 an einem Untergrund 24, zum Beispiel einer Dachhaut eines Flachdachs, abstützen kann. Das obere Auflager 14 weist dabei einen größeren Abstand zu einer von den Standflächen 22 aufgespannten Ebene auf als das untere Auflager 18.

Um die Funktion und Verwendung eines solchen Montagefußes 10 sowie den Unterschied zwischen ersten und zweiten Modulplatten 16, 20 zu verdeutlichen, ist in Figur 2 ein Ausschnitt einer Solaranlage 25 mit einem Montagesystem 26 für Solarmodule dargestellt, wobei das vorliegende Montagesystem 26 ein Flachdach-Montagesystem mit entsprechend horizontalem Untergrund 24 ist und mehrere Montagefüße 10 gemäß Figur 1 aufweist. Das Montagesystem 26 bildet zusammen mit den als Modulplatten 16, 20 ausgebildeten Solarmodulen die Solaranlage 25. Außer auf Flachdächern ist eine Verwendung des Montagesystems 26 auch auf Pultdächern mit geringer Dachneigung oder einem anderen Untergrund 24 mit geringer Neigung denkbar.

Das Montagesystem 26 umfasst mehrere relativ zu einer von der Standfläche 22 aufgespannten Ebene geneigte oder schräggestellte Solarmodule, welche gemäß Figur 2 in zwei Solarmodulreihen mit ersten Modulplatten 16 und zweiten Modulplatten 20 aufgeteilt sind, wobei in Figur 2 nur eine zweite Modulplatte 20 gezeigt ist. Als Solarmodulreihe werden dabei alle Modulplatten 16, 20 bezeichnet, welche koplanar, das heißt in einer Ebene liegend, angeordnet sind. Die Modulplatten 16, 20 zweier unterschiedlicher Solarmodulreihen sind hingegen nicht-koplanar angeordnet und liegen entsprechend in unterschiedlichen, wenn auch zumeist im Wesentlichen parallelen Ebenen.

Die Schrägstellung bzw. Neigung der Solarmodule ist in der Regel so ausgerichtet, dass eine Oberseite der Solarmodule, jedenfalls auf der Nordhalbkugel, nach Süden gewandt ist. Im Folgenden wird eine Neigungsrichtung der Solarmodule als Längsrichtung 28 des Montagesystems 26 definiert, sodass die Längsrichtung 28 bei einer fertiggestellten Solaranlage 25 gemäß Figur 2 üblicherweise der Nord-Süd-Richtung entspricht. Dementsprechend erstreckt sich eine Solarmodulreihe in einer Querrichtung 30, welche üblicherweise der West-Ost-Richtung entspricht.

Mit Bezug auf den Montagefuß 10 gemäß Figur 1 ist sowohl das obere Auflager 14 als auch das untere Auflager 18 am freien Ende eines vom Grundkörper 12 nach oben ragenden Schenkels 32, 34 angeordnet.

Gemäß Figur 1 schließen beide Schenkel 32, 34 für die Auflager 14, 18 jeweils einen spitzen Winkel α, β mit der Standfläche 22 ein, wobei die Schenkel 32, 34 in Längsrichtung 28 jeweils voneinander weg gerichtet sind.

Insbesondere der Schenkel 32 des oberen Auflagers 14 ist vom Schenkel 34 weg gerichtet und schließt einen spitzen (Anstell-)Winkel α, das heißt einen Winkel von 0° < α < 90° mit der Standfläche 22 ein. Aufgrund des bei einer Windbelastung auftretenden Staudrucks liegt der Anstellwinkel α des Schenkels 32 vorzugsweise zwischen 50° und 80°. Anstellwinkel α ≥ 90° sind prinzipiell denkbar, aus dem oben genannten Grund allerdings nur in besonderen Ausnahmefällen sinnvoll.

Der Schenkel 34 des unteren Auflagers 18 ist in der Regel so kurz, dass sein Anstellwinkel β keinen nennenswerten Einfluss auf das Montagesystem 26 hat. Daher kann der in Figur 1 eingezeichnete Anstellwinkel β des Schenkels 34 auch Werte von β ≥ 90° annehmen.

Der Grundkörper 12 des Montagefußes 10 gemäß Figur 1 umfasst einen ersten Grundkörperabschnitt 37 mit einem das obere Auflager 14 aufweisenden Schenkel 32, einen zweiten Grundkörperabschnitt 38 mit einem das untere Auflager 18 aufweisenden Schenkel 34 und einen Verbindungssteg 39 zwischen den Grundkörperabschnitten 37, 38, wobei die Standfläche 22 im Bereich des Verbindungsstegs 39 unterbrochen ist. Mit anderen Worten gibt es zwei Standflächen 22, welche in vorteilhafter Weise unmittelbar an den Lasteinleitungsstellen der Schenkel 32, 34 des Montagefußes 10 angeordnet sind, sodass eine sichere Lastabstützung in den Untergrund 24 gewährleistet ist. Gegenüber einer einzigen, großen Standfläche 22 bietet diese Ausführungsform bei lokal sehr unebenem Untergrund 24 den Vorteil einer größeren Standsicherheit infolge geringerer Kippneigung.

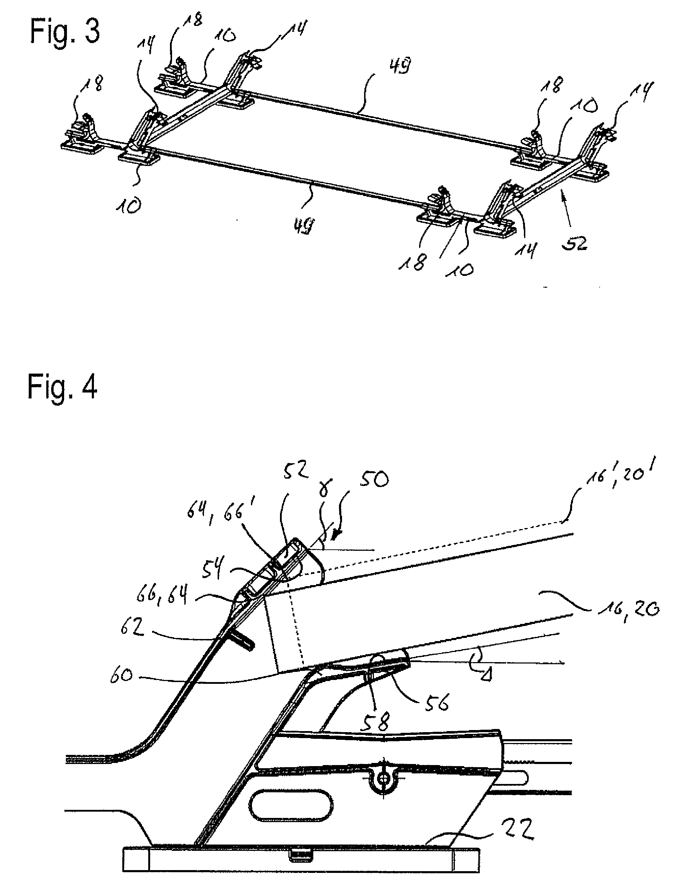

Das Montagesystem 26 weist in Figur 2 mehrere in Längsrichtung 28 hintereinander angeordneten Montagefüße 10 auf, um den vorderen Rand 36 einer Modulplatte 16, 20 am unteren Auflager 18 eines vorderen Montagefußes 10 und einen hinteren Rand 48 dieser Modulplatte 16, 20 am oberen Auflager 14 eines hinteren Montagefußes 10 zu lagern. Darüber hinaus umfasst das Montagesystem 26 Längsverbindungsstreben 49 zum Verbinden von zwei in Längsrichtung 28 benachbarten Montagefüßen 10 sowie Querverbindungsstreben 52 zum Verbinden von zwei in Querrichtung 30 benachbarten Montagefüßen 10. Dieser prinzipielle Systemaufbau lässt sich insbesondere auch der Figur 3 entnehmen, in der ein Ausschnitt des Montagesystems 26 dargestellt ist.

Die einzelnen Montagefüße 10 gemäß Figur 1 weisen jeweils höhenversetzte Auflager 14, 18 für bis zu vier Modulplatten 16, 20 auf, wobei in den Eck- und Randbereichen des Montagesystems 26 lediglich ein oder zwei Auflager 14, 18 genutzt werden. Insbesondere an dem von Süden gesehen vorderen Ende des Montagesystems 26 werden entsprechend angepasste Montagefüße 10' verwendet, welche im Wesentlichen nur aus dem zweiten Grundkörperabschnitt 38 mit den vorderen Auflagern 18 bestehen (vgl. Figur 2).

Im vorliegenden Ausführungsbeispiel ist das freie Ende der Schenkels 34 mit dem unteren Auflager 18 als Gabellager 50 zur Aufnahme eines (von Süden gesehen) vorderen Randes 36 der Modulplatte 16, 20 ausgebildet (vgl. auch Figur 2). Das Gabellager 50 ist dabei so ausgeführt, dass es ein begrenztes Verschwenken der Modulplatte 16, 20 um das untere Auflager 18 zulässt, sodass der Montagefuß 10 in baugleicher Ausführung für verschiedene Neigungswinkel der Solarmodule verwendet werden kann.

Wie in Figur 4 zu sehen ist, weist das Gabellager 50 eine an der oberen Gabelseite 52 angeordnete obere Anlagefläche 54 sowie eine an der unteren Gabelseite 56 vorgesehen untere Anlagefläche 58 auf, die gegenüberliegend an der Innenseite des Gabellagers 50 angeordnet sind. Die Gabelseiten 52, 56 weiten sich zu ihrem freien Ende hin auf, so dass das Gabellager v-förmig ausgebildet ist.

Sowohl die obere Anlagefläche 54 als auch die untere Anlagefläche 58 weisen gegenüber der Standfläche 22 einen Neigungswinkel γ bzw. Δ zur von der Standfläche 22 aufgespannten Ebene auf, wobei der Neigungswinkel γ der unteren Anlagefläche 58 kleiner ist als der Neigungswinkel γ der oberen Anlagefläche 54. Beide Neigungswinkel γ, Δ liegen hier zwischen 0 und 90°, es ist aber prinzipiell denkbar, dass diese kleiner als 0 bzw. größer als 90° sind.

Auf der unteren Anlagefläche 58 ist desweiteren ein in Richtung zur oberen Anlagefläche 54 ragender Vorsprung 60 vorgesehen, der sich in Querrichtung über die gesamte Breite der Anlagefläche 58 erstreckt. An der oberen Anlagefläche 54 ist zudem ein Anschlag 62 vorgesehen, der insbesondere bei dünneren Modulplatten 16, 20 ein zu weites Einschieben in das Gabellager 50 verhindert.

Eine in das Gabellager 50 eingeschobene Modulplatte 16, 20 liegt mit einer an die Oberseite der Modulplatte angrenzenden Kante 64 an einem Anlagepunkt 66 an der oberen Anlagefläche 54 an. Mit der Unterseite liegt die Modulplatte 16, 20 am Vorsprung 60 der unteren Anlagefläche 58 auf. Dadurch ist sie zwischen den Gabelseiten 52, 56 sicher gehalten.

Eine dickere Modulplatte 16', 20' lässt sich nicht so weit in das Gabellager 50 einschieben und liegt dementsprechend mit der oberen Kante 64' an einem Anlagepunkt 66' an der oberen Anlagefläche 54 an, der näher am offenen Ende des Gabellagers 50 liegt. Entsprechend den Abmessungen des Gabellagers 50 bzw. der Länge der Gabelseiten 52, 56 ist eine Lagerung unterschiedlich dicker Modulplatten 16, 20 möglich. Vorzugweise ist eine Lagerung von Modulplatten 16, 20 mit einer Dicke von 35 - 50mm möglich.

Das Gabellager 50 ermöglicht darüber hinaus die Lagerung einer Modulplatte 16, 20 mit verschiedenen Neigungswinkel der Modulplatte 16, 20. Der Vorsprung 60 dient hier als Drehpunkt, um den die Modulplatte 16, 20 geschwenkt werden kann. Das heißt, die Modulplatte liegt stets mit der Unterseite am Vorsprung 60 an und wird um diesen verschwenkt. Ist der gewünschte Neigungswinkel erreicht, kann die Modulplatte 16, 20 so weit in das Gabellager 50 eingeschoben werden, bis die obere Kante 64 an der oberen Anlagefläche 54 anliegt. Durch den Vorsprung 60 wird dabei zum einen die Schwenkbewegung erleichtert. Zum anderen wird der Einstellbereich des Neigungswinkels der Modulplatte 16, 20 vergrößert.

Würde die Modulplatte 16, 20 an den beiden Anlageflächen 54, 58 anliegen, wäre der Einstellbereich des Neigungswinkels durch die Neigungswinkel γ, Δ der Anlageflächen 54, 58 begrenzt. Im Extremfall würde die Modulplatte 16, 20 mit der Unterseite auf der unteren Anlagefläche 58 aufliegen bzw. an der oberen Anlagefläche 54 mit der Oberseite. Durch den Vorsprung 60 kann die Modulplatte 16, 20 auch mit einem Neigungswinkel eingebaut werden, der flacher ist als der Neigungswinkel Δ der unteren Anlagefläche 58.

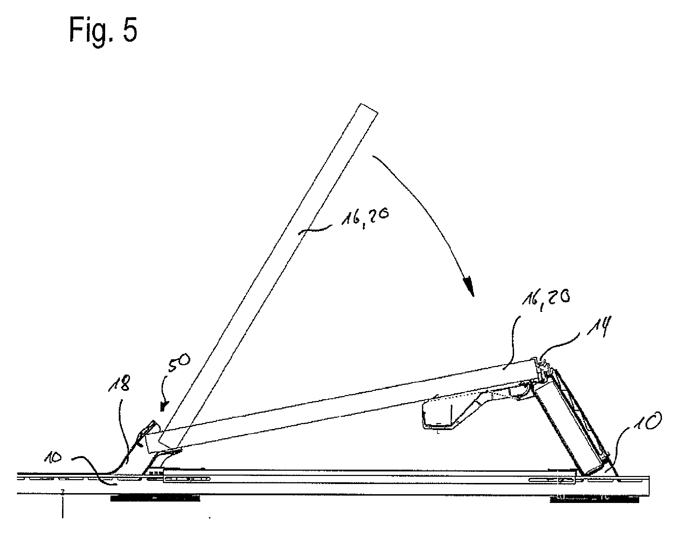

Die Montage einer Modulplatte 16, 20 ist beispielhaft in Figur 5 dargestellt. Die Modulplatte 16, 20 wird in einem relativ steilen Winkel in das Gabellager 50 des unteren Auflagers 18 aufgesetzt. Anschließend wir die Modulplatte 16, 20 im Gabellager 50 so weit verschwenkt, bis der hintere Rand der Modulplatte 16, 20 am oberen Auflager eines zweiten Montagefußes 10 aufliegt und der hintere Rand der Modulplatte 16, 20 mit einer Klemme oder einem anderen geeigneten Befestigungsmittel am oberen Auflager 14 fixiert. In dieser Position liegt die Modulplatte 16, 20 an der unteren Anlagefläche 58, hier am Vorsprung 60 und an der oberen Anlagefläche 54 an, und ist so sicher gehalten.

Der Montagefuß 10 ist vorzugsweise einstückig aus Kunststoff, insbesondere faserverstärktem Kunststoff hergestellt. Aus Kunststoffen lassen sich auch relativ komplexe geometrische Formen wie der Montagefuß 10 mit relativ geringem Aufwand herstellen. Ferner sind für den Montagefuß 10 geeignete Kunststoffe mit ausreichender Festigkeit, Dauerhaftigkeit und Witterungsbeständigkeit vergleichsweise preiswert erhältlich, sodass sich der Montagefuß 10 insgesamt sehr kostengünstig fertigen lässt. Alternativ ist selbstverständlich auch eine einstückige oder mehrteilige Herstellung des Montagefußes 10 aus Metall, insbesondere aus Stahl oder Aluminium denkbar.

## Patentansprüche

1. Montagefuß (10) für Solarmodule mit
einem Grundkörper (12), der wenigstens eine Standfläche (22) hat, mit welcher sich der Montagefuß (10) an einem Untergrund (24) abstützen kann, und
mit einer variablen Aufnahme für eine Modulplatte (16, 20), die als V-förmiges Gabellager (50) zur Aufnahme eines Randes der Modulplatte (16, 20) ausgebildet ist.

2. Montagefuß nach Anspruch 1, **dadurch gekennzeichnet, dass** das Gabellager (50) eine obere Anlagefläche (54) und eine untere Anlagefläche (58) für den Rand der Modulplatte (16, 20) aufweist, die gegenüberliegend auf der Innenseite des Gabellagers (50) angeordnet sind.

3. Montagefuß nach Anspruch 2, **dadurch gekennzeichnet, dass** die obere Anlagefläche (54) und die untere Anlagefläche (58) zur Standfläche (22) geneigt sind und der Neigungswinkel (γ) der oberen Anlagefläche (54) größer ist als der Neigungswinkel (Δ) der unteren Anlagefläche (58).

4. Montagefuß nach einem der Ansprüche 2 und 3, **dadurch gekennzeichnet, dass** an der unteren Anlagefläche (58) ein in Richtung zur oberen Anlagefläche (54) ragender, insbesondere parallel zum Rand der Modulplatte (16, 20) verlaufender Vorsprung (60) vorgesehen ist.

5. Montagefuß nach einem der vorhergehenden Ansprüche, **dadurch gekennzeichnet, dass** am Gabellager (50) ein Anschlag (62) für den Rand der Modulplatte (16, 20) vorgesehen ist.

6. Montagefuß nach einem der vorhergehenden Ansprüche, **dadurch gekennzeichnet, dass** der Montagefuß (10) ein unteres Auflager (18) und ein oberes Auflager (14) aufweist, wobei das Gabellager (50) am unteren Auflager (18) angeordnet ist.
